(19) Europäisches Patentamt
European Patent Office
Office européen des brevets

(11) **EP 3 950 423 B1**

(12) **EUROPEAN PATENT SPECIFICATION**

(45) Date of publication and mention
of the grant of the patent:
**11.02.2026   Bulletin 2026/07**

(21) Application number: **19923035.0**

(22) Date of filing: **12.12.2019**

(51) International Patent Classification (IPC):
**G01S 17/931** (2020.01)     **G01S 13/931** (2020.01)
**G01S 7/481** (2006.01)     **G01S 7/02** (2006.01)
**B60P 1/04** (2006.01)

(52) Cooperative Patent Classification (CPC):
**G01S 17/931; B60P 1/04;** G01S 2013/9315;
G01S 2013/932; G01S 2013/93274

(86) International application number:
**PCT/JP2019/048771**

(87) International publication number:
**WO 2020/202650 (08.10.2020 Gazette 2020/41)**

(54) **WORK VEHICLE**

NUTZFAHRZEUG

VÉHICULE DE TRAVAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **29.03.2019   JP 2019067152**

(43) Date of publication of application:
**09.02.2022   Bulletin 2022/06**

(73) Proprietor: **Hitachi Construction Machinery Co.,
Ltd.
Tokyo 110-0015 (JP)**

(72) Inventors:
• **TSUJIMURA Shun**
**Tsuchiura-shi, Ibaraki 300-0013 (JP)**
• **SAKAMOTO Hiroshi**
**Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(56) References cited:
JP-A- 2010 204 030     JP-A- 2015 065 515
JP-A- 2018 185 236     US-A1- 2004 217 851
US-A1- 2011 196 568     US-A1- 2013 173 201

**Description**

Technical Field

The present invention relates to a work machine.

Background Art

In a mine, as a work machine for carrying ore or stripped soil from a loading site to a dumping site, for example, a large dump truck is operated. Since such a work machine that is operated in a mine or the like is significantly large in size compared to general vehicles, it inevitably has many ranges (what is called blind spots) that cannot directly be viewed from an operator's seat provided on the work machine, and it is not easy to make decision of presence or absence of an obstacle around the work machine or a like decision.

As a technology for checking the surroundings of such a work machine as described above, a technology disclosed in Patent Document 1 is available, for example. Patent Document 1 discloses a dump truck with an obstacle detection mechanism by which an obstacle around the machine can be detected using a plurality of radars provided on a periphery of the machine. The dump truck with the obstacle detection mechanism includes a rearward irradiation side radar and a sideward irradiation side radar. The rearward irradiation side radar is attached so as to be directed toward the rear at a position overhanging sideward from a front fender extending from a lower deck to an upper deck at a front portion of the machine and is configured to irradiate an irradiation beam having at least a depression angle with which the irradiation beam crosses a front wheel of the machine. The sideward irradiation side radar is attached so as to be directed toward the side to a side portion of the lower deck. The rearward irradiation side radar has a horizontal forward detection limit line and the sideward irradiation side radar has a horizontal rearward detection limit line, which lines overlap with each other, and besides, the rearward irradiation side radar has a horizontal rearward detection limit line directed to the machine center plane side, so that the radars can detect an obstacle that is present sideward of the machine.

Patent Document 2 discloses a sensor calibration system for a mobile machine. The sensor calibration system has have a first machine mounted sensor disposed on the mobile machine and configured to sense a characteristic of an offboard object and to generate a corresponding signal, and a second machine mounted sensor disposed on the mobile machine and configured to sense the characteristic of the offboard object and to generate a corresponding signal.

Patent Document 3 discloses an obstacle detection system for a work machine. The obstacle detection system includes at least one sensing device and an interface device. The sensing device is configured to identify the presence of an obstacle in an area around the machine and the interface device is configured to alert an operator to the presence and position of the obstacle with respect to the machine.

Prior Art Documents

Patent Documents

Patent Document 1: JP-2013-195084-A
Patent Document 2: US 2013/173201 A1
Patent Document 3: US 2004/217851 A1

Summary of the Invention

Problem to be Solved by the Invention

In the prior art described above, an irradiation range of each side radar is set so as to include a region in which a structure of the machine exists, and this region is excluded from an obstacle detection range, to thereby detect an obstacle other than the structure of the machine.

However, in a work machine having front wheels serving as steered wheels, for example, if a detection target range is set such that it includes a range of movement of one of the front wheels by steering, since the position (angle) of the front wheel changes upon steering for a right turn, a left turn, or a like movement of the machine, the front wheel blocks the detection target range set in advance and narrows the detection range.

The present invention has been made in view of such a situation as described above, and it is an object of the present invention to provide a work machine that can suppress a detection range of an obstacle sensor from being narrowed.

Means for Solving the Problem

The present application includes a plurality of means for solving the problem described above. Examples of the means includes a work machine including a machine body frame, front wheels disposed on left and right of the machine body frame to be steered, rear wheels disposed on left and right of the machine body frame, an obstacle sensor that is provided on a side of the machine body frame to detect an obstacle, and a controller configured to output a notification signal to a notification device when an obstacle is detected by the obstacle sensor. The obstacle sensor is provided at a position between the front wheel and the rear wheel on the side of the machine body frame, at which a virtual plane along an outer side face of the front wheel positioned correspondingly to a maximum steering angle steered in the maximum in a direction in which the front wheel becomes an inner wheel crosses an outer side face of the machine body frame. The controller is configured to calculate a region in which the front wheel exists which is changed by the steering of the front wheel, output, when a detection position of an obstacle detected by the obstacle sensor is outside the region in which the front wheel exists, the notification signal to the notification device, and stop, when a detection position of an obstacle detected by the obstacle sensor is within the region in which the front wheel exists, outputting of the notification signal. The obstacle sensor is disposed on a side face of the machine body frame, at a position on the machine body frame side with respect to a virtual plane along an inner side face of the front wheel positioned correspondingly to traveling straight ahead with the steering angle being zero degrees.

Advantages of the Invention

According to the present invention, the detection range of the obstacle sensor can be suppressed from being narrowed.

Brief Description of the Drawings

FIG. 1 is a side elevational view schematically depicting an appearance of a dump truck that is an example of a work machine.
FIG. 2 is a rear elevational view schematically depicting an appearance of the dump truck that is an example of the work machine.
FIG. 3 is a view depicting a positional relation of front wheels, rear wheels, and a machine body frame, as viewed from above.
FIG. 4 is a functional block diagram schematically depicting an obstacle detection system including a side obstacle sensor.
FIG. 5 is a flow chart depicting an obstacle detection process by the obstacle detection system.
FIG. 6 is a view illustrating calculation of a region in which a front wheel exists.
FIG. 7 is a view depicting a positional relation of front wheels, rear wheels, and a machine body frame of a dump truck as a comparative example, as viewed from above.
FIG. 8 is a view depicting a positional relation of front wheels, rear wheels, and a machine body frame of another dump truck as another comparative example, as viewed from above.

Modes for Carrying Out the Invention

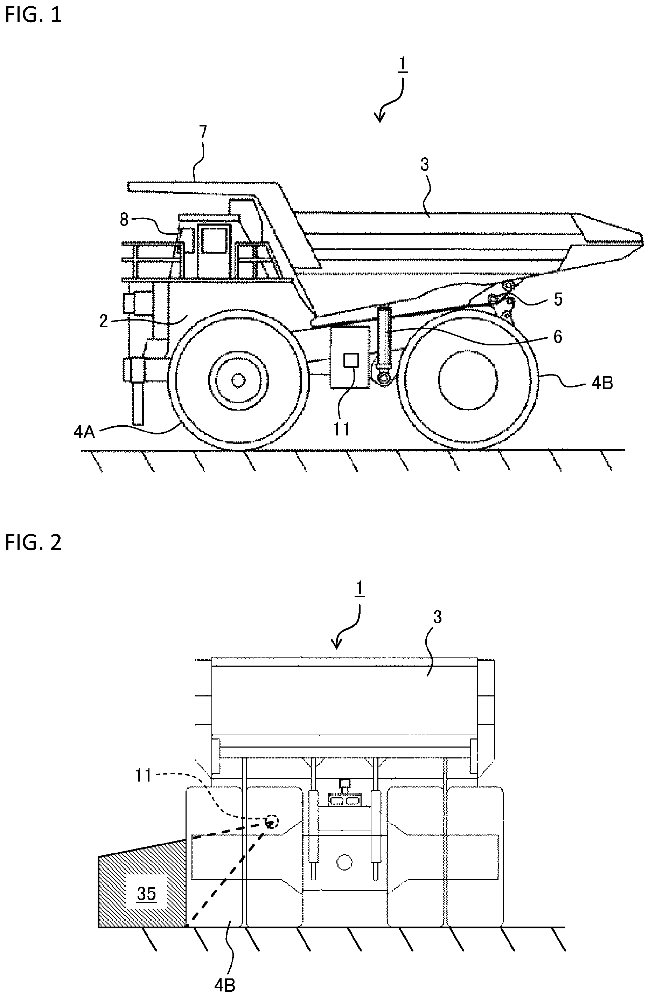

In the following, an embodiment of the present invention is described with reference to FIGS. 1 to 8.
It is to be noted that, although the present embodiment is described exemplifying a dump truck having a loading platform onto which a loading target is to be loaded as an example of a work machine, it is also possible to apply the present invention to any work machine other than a dump truck as long as the work machine has wheels.

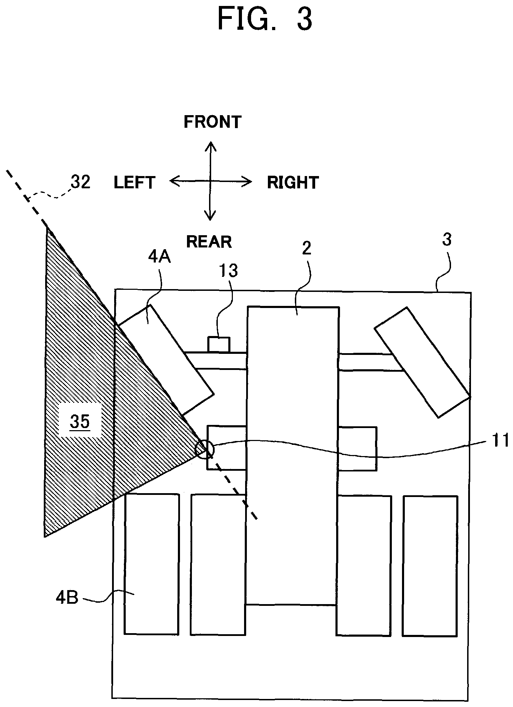

FIG. 1 is a side elevational view schematically depicting an appearance of a dump truck that is an example of a work machine according to the present embodiment, and FIG. 2 is a rear elevational view. Further, FIG. 3 is a view depicting a positional relation of front wheels, rear wheels, and a machine body frame, as viewed from above.
Referring to FIGS. 1 to 3, a dump truck 1 is generally configured from a machine body frame 2 that extends in a forward and rearward direction and forms a support structure, a vessel (loading platform) 3 arranged so as to extend in the forward and rearward direction at an upper portion of the machine body frame 2 and provided such that it can be tilted (inclined) around a rear end lower portion thereof on the machine body frame 2 through a pin-coupling portion 5, a derrick cylinder 6 that performs a derrick motion of the vessel 3, front wheels 4A provided on the left and right of a lower front side of the machine body frame 2, rear wheels 4B provided on the left and right of a lower rear side of the machine body frame 2, and an operation room 8 provided on an upper front side of the machine body frame 2.

**EP 3 950 423 B1**

The vessel 3 is a container provided for loading cargoes such as crushed stones and has an eave portion 7 provided at a front upper portion thereof so as to cover the operation room 8 from above. The eave portion 7 has a function of protecting the operation room 8 from scattered objects such as debris and protecting the operation room 8 when the machine falls, for example.

The front wheels 4A are driven wheels and simultaneously are steered wheels and change a traveling direction of the dump truck 1 by being turned in a leftward or rightward direction by an operator operating a steering wheel or the like, not depicted, provided in the operation room 8. A front wheel coordinate sensor 13 that detects a steering angle and a steering direction of the front wheels 4A is provided to the front wheels 4A. The rear wheels 4B are driving wheels and are driven by output power of an engine, not depicted, disposed on the machine body frame 2, to thereby move the dump truck 1 forward or backward.

At a position between the front wheel 4A and the rear wheel 4B on each side of the machine body frame 2, at which a virtual plane along an outer side face of the front wheel 4A positioned correspondingly to a maximum steering angle steered in the maximum in a direction in which the front wheel 4A becomes an inner wheel (the virtual plane is equivalent to a vertical plane including a broken line 32) crosses the machine body frame 2, a side obstacle sensor 11 is disposed which detects a position of an obstacle within a detection target range set sideward of the dump truck 1. Further, the side obstacle sensor 11 is disposed on a side face of the machine body frame 2, at a position on the machine body frame 2 side with respect to a virtual plane along an inner side face of the front wheel 4A positioned correspondingly to a minimum steering angle (that is, positioned correspondingly to traveling straight ahead with the steering angle being zero degrees). Consequently, the side obstacle sensor 11 becomes less likely to be influenced by mud, gravel, or the like scattered by an influence of the front wheel 4A when the dump truck 1 is traveling.

It is to be noted that, although description is made representatively of the side obstacle sensor 11 disposed on the left side of the machine body frame 2 in the present embodiment, the description similarly applies also to a side obstacle sensor (not depicted) disposed on the right side of the machine body frame 2, and description of this obstacle sensor is omitted.

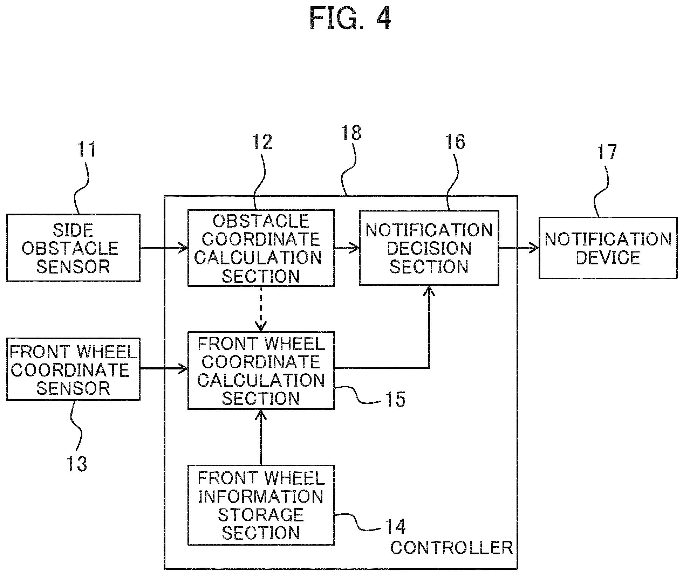

In an inside of the operation room 8, an operator's seat on which the operator who operates the dump truck 1 is to be seated, a controller 18 and a notification device 17 (refer to FIG. 4 hereinafter described) that configure an obstacle detection system, a steering wheel that is an operation device, an accelerator pedal and a brake pedal (both not depicted), and so forth are arranged.

FIG. 4 is a functional block diagram schematically depicting the obstacle detection system including the side obstacle sensor.

Referring to FIG. 4, the obstacle detection system is configured from the side obstacle sensor 11, the front wheel coordinate sensor 13, the controller 18, and the notification device 17.

The side obstacle sensor 11 is, for example, a LiDAR device (Light Detection and Ranging: light detection and distance measurement device). It is to be noted that it is sufficient if the side obstacle sensor 11 can detect a position of an obstacle, and for example, a millimeter wave radar, an infrared sensor, a camera, or the like may be used.

The front wheel coordinate sensor 13 is, for example, an angle sensor provided on a link mechanism of the front wheels 4A and detects the steering angle and the steering direction from a reference position of the front wheels 4A (for example, a position at which the front wheels 4A are aligned with the forward and rearward direction). It is to be noted that it is sufficient if the front wheel coordinate sensor 13 can detect the steering angle and the steering direction of the front wheels 4A, and, for example, the steering angle of the front wheels 4A may be calculated from a detection value of a steering sensor (a steering angle sensor for the steering wheel) or the like.

The notification device 17 is provided in the inside of the operation room 8 to notify the operator of various kinds of information and is a speaker that emits sound, a monitor, or the like.

The controller 18 outputs to the notification device 17 a notification signal for notifying the operator of obstacle detection on the basis of a detection result of the side obstacle sensor 11 and a detection result of the front wheel coordinate sensor 13. The controller 18 includes an obstacle coordinate calculation section 12, a front wheel information storage section 14, a front wheel coordinate calculation section 15, and a notification decision section 16.

In the following, an obstacle detection process by the obstacle detection system is described in detail together with operation of the functional blocks of the controller 18.

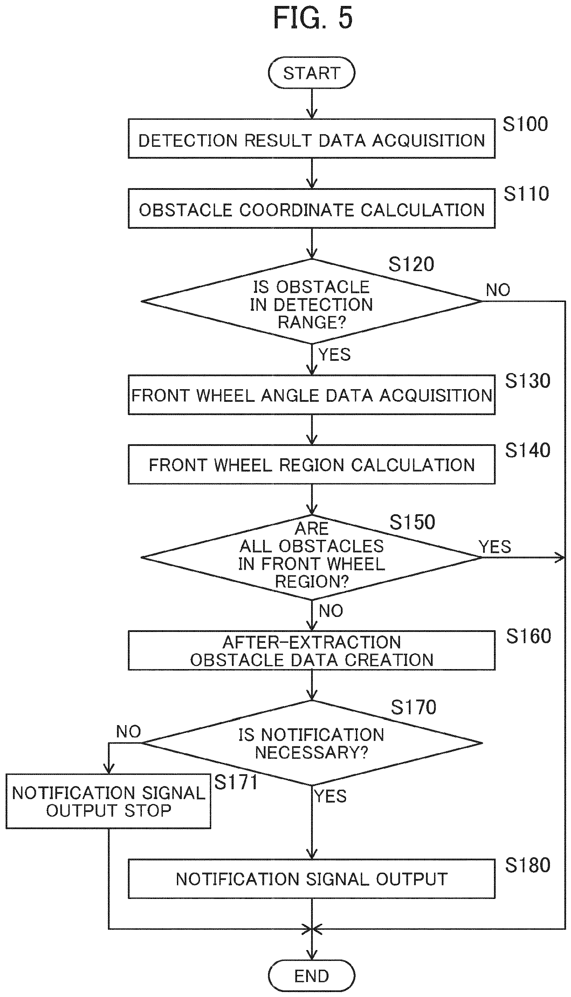

FIG. 5 is a flow chart depicting the obstacle detection process by the obstacle detection system.

Referring to FIG. 5, the obstacle coordinate calculation section 12 of the controller 18 acquires a detection result from the side obstacle sensor 11 (step S100) and calculates coordinates of obstacles (step S110). Then, the obstacle coordinate calculation section 12 decides whether or not any obstacle exists in a detection target region of the side obstacle sensor 11 (step S120), and if a detection result is NO, the processing is ended. On the other hand, if the decision result at step S120 is YES, that is, if any obstacle exists in the detection target range, the obstacle coordinate calculation section 12 outputs information of the obstacle (obstacle data) to the notification decision section 16 and a front wheel coordinate calculation section 15.

The obstacle detection result (obstacle data) is configured from an ID for identifying the obstacle and coordinates

4

at which the obstacle is detected, and detection coordinates can be decided for each obstacle.

If the decision result at step S120 is YES, the front wheel coordinate calculation section 15 acquires a detection result (front wheel angle data) from the front wheel coordinate sensor 13 (step S130), calculates coordinates of several portions of the front wheel by using information stored in the front wheel information storage section 14 to calculate a region in which the front wheel exists (front wheel region), and then outputs the calculated region to the notification decision section 16 (step S140).

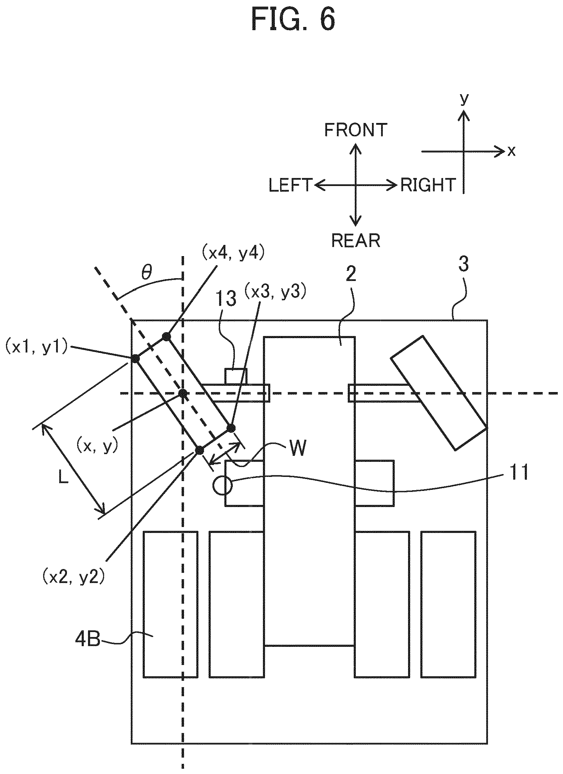

FIG. 6 is a view illustrating calculation of the region in which the front wheel exists. In FIG. 6, a machine body coordinate system is used in which a y axis is set in advance so as to extend along the forward and rearward direction of the dump truck 1 with the forward direction set as positive and an x axis is set in advance so as to extend along a direction perpendicular to the y axis with the rightward direction set as positive.

As depicted in FIG. 6, the front wheel region is represented by coordinates of several portions of the front wheel 4A that is calculated on the basis of a steering angle $\theta$ of the front wheel 4A that is a steered wheel, turning motion center coordinates (x, y) in steering of the front wheel, and information of the shape of the front wheel. The information of the shape of the front wheel is such information as, for example, relative coordinates of the individual portions of the front wheel 4A with respect to the turning motion center coordinates (x, y) and a diameter L and a width W of the front wheel 4A, and the coordinates of the individual portions of the front wheel 4A can be calculated from information such as the steering angle $\theta$. The front wheel region is represented, for example, by coordinates (x1, y1), (x2, y2), (x3, y3), and (x4, y4) of four corners of a projection of the front wheel 4A to a plane (x-y plane) parallel to the ground on which the dump truck 1 is disposed.

In short, the front wheel region can be calculated according to the following (Expression 1), using the diameter L, the width W, the turning motion center coordinates (x, y), and the steering angle $\theta$ of the front wheel 4A.

[Math. 1]

$$\begin{pmatrix} x1 & x2 & x3 & x4 \\ y1 & y2 & y3 & y4 \end{pmatrix} = \begin{pmatrix} \cos\theta & -\sin\theta \\ \sin\theta & \cos\theta \end{pmatrix} \begin{pmatrix} -1/2W & -1/2W & 1/2W & 1/2W \\ 1/2L & -1/2L & -1/2L & 1/2L \end{pmatrix} + \begin{pmatrix} x \\ y \end{pmatrix}$$

$$\dots \text{ (Expression 1)}$$

It is to be noted that, although a case where the front wheel region of the front wheel 4A is indicated two-dimensionally by coordinates on the x-y plane is exemplified in the description of the present embodiment, this is not restrictive. z coordinates may be set along a direction perpendicular to the x-y plane with the upward direction set as positive such that the front wheel region is threedimensionally obtained.

After the calculation process of the front wheel region at step S140 ends, the notification decision section 16 subsequently decides on the basis of the obstacle data from the obstacle coordinate calculation section 12 and the front wheel region from the front wheel coordinate calculation section 15 whether or not the coordinates of all obstacles in the obstacle data are included in the front wheel region (step S150). If a decision result is YES, that is, if the coordinates of all obstacles in the obstacle data are included in the front wheel region, the notification decision section 16 decides that all of the obstacle data originates from the front wheel and there is no necessity for notification, and ends the process. On the other hand, if the decision result at step S150 is NO, that is, if the coordinates of at least one obstacle of the obstacle data are not included in the front wheel region, the notification decision section 16 extracts the obstacle whose coordinates are not included in the front wheel region from the obstacle data to generate after-extraction obstacle data (step S160).

Then, the notification decision section 16 decides on the basis of the after-extraction obstacle data generated at step S160 whether or not notification to the operator is necessary (step S170). If a detection result is YES, the notification decision section 16 outputs a notification signal to the notification device 17 to notify the operator of the detection of an obstacle to call attention of the operator (step S180). On the other hand, if the decision result at step S170 is NO, the notification decision section 16 stops outputting of a notification signal to the notification device 17 (step S171) and ends the process.

In the decision at step S170, the notification decision section 16 calculates, for example, a predicted traveling path of the dump truck 1, and if an obstacle is detected at a position in a distance shorter than a predetermined decision distance from the dump truck 1 (the machine body frame 2, the front wheel 4A, the rear wheel 4B, or the like) in the case of traveling along the predicted traveling path, the notification decision section 16 decides that notification is necessary. If an obstacle is detected only at a position in a distance longer than the predetermined decision distance, on the other hand, the notification decision section 16 decides that notification is unnecessary. It is to be noted that those obstacles whose coordinates exist within the front wheel region from among the detected obstacles are not each considered as a decision target at step S170 because the front wheel 4A itself is detected as an obstacle.

Effects of the present embodiment configured in such a manner as described above are described in detail by using comparative examples.

In such a prior art that an obstacle around the machine is detected using a plurality of radars provided on the periphery of the machine, for example, if a detection target range is set such that it includes a range of movement of the front wheel by steering, since the position (angle) of the front wheel changes upon steering for a left turn, a right turn, or a like movement of the machine, it is supposed that the front wheel may block the detection target range set in advance and may be detected as an obstacle. Although it is also conceivable to exclude the range of movement of the front wheel from the obstacle detection target range in advance, since, in this case, a region in which an obstacle is not detected is set in advance around the front wheel, a detection range 35 in which obstacle detection is to be actually performed around the front wheel where the necessity for obstacle detection is high (a range in which an obstacle can be detected from within the detection target range: refer to FIG. 3 and so forth) is narrowed.

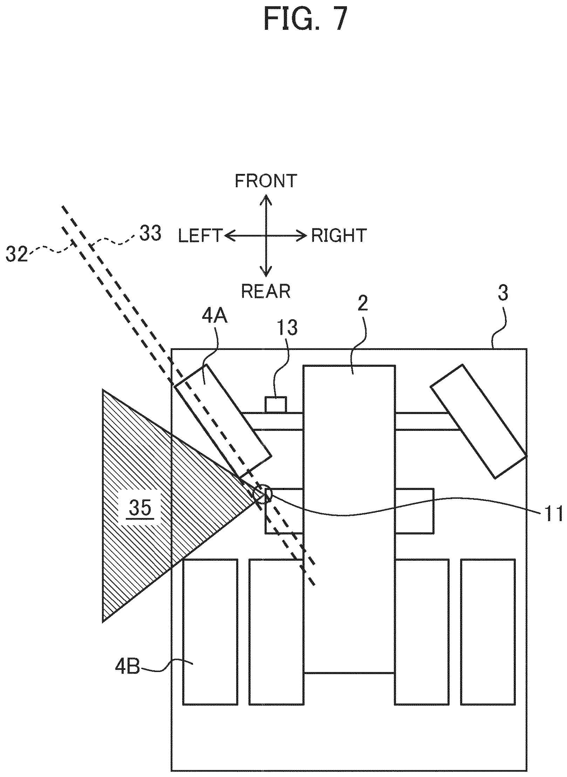

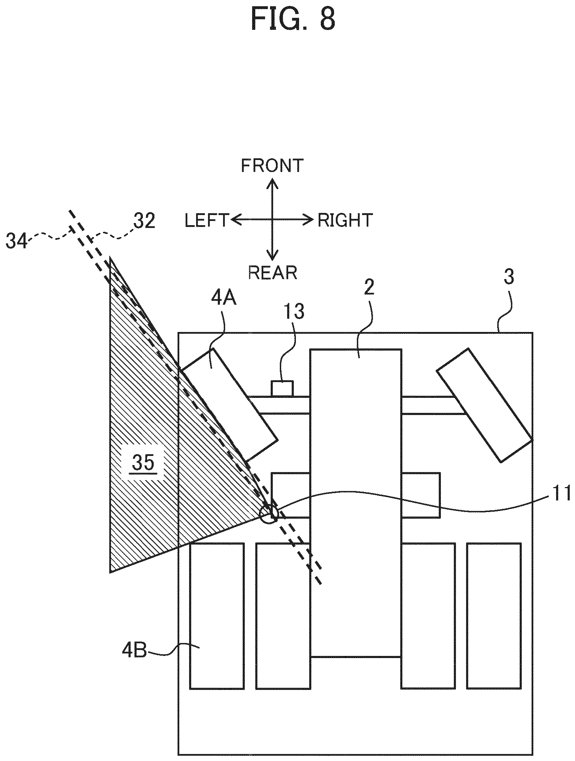

FIGS. 7 and 8 are views each depicting a positional relation of front wheels, rear wheels, and a machine body frame of a dump track as a comparative example, as viewed from above.

As exemplified in FIG. 7, if the side obstacle sensor 11 is provided on the front side with respect to that in the case of FIG. 3, the detection range 35 in the proximity of a side face of the front wheel 4A is narrowed from that in the case of FIG. 3 because it is blocked by the front wheel 4A, which leads to a blind spot of the detection target range of the side obstacle sensor 11. Further, if the side obstacle sensor 11 is provided on the rear side with respect to that in the case of FIG. 3 as depicted in FIG. 8, although the detection range 35 extends to the proximity of the side face of the front wheel 4A, since a distance between the side obstacle sensor 11 and the rear wheel 4B is reduced, the detection range 35 in the proximity of a side face of the rear wheel 4B is narrowed from that in the case of FIG. 3, and this increases the blind spot of the detection target range of the side obstacle sensor 11.

In contrast, in the present embodiment, the dump truck 1 includes the front wheels 4A that are arranged on the left and right of the machine body frame 2 and are steered wheels, rear wheels 4B arranged on the left and right of the machine body frame 2, the side obstacle sensor 11 that is provided on a side of the machine body frame 2 and detects an obstacle, and the controller 18 that outputs a notification signal to the notification device 17 when an obstacle is detected by the side obstacle sensor 11. The dump truck 1 is configured such that the side obstacle sensor 11 is provided at a position between the front wheel 4A and the rear wheel 4B on the side of the machine body frame 2, at which the virtual plane along the outer side face of the front wheel 4A positioned correspondingly to the maximum steering angle steered in the maximum in a direction in which the front wheel 4A becomes an inner wheel crosses an outer side face of the machine body frame 2. Consequently, the detection range of the side obstacle sensor 11 can be suppressed from being narrowed.

In the following, features of the embodiment described above are described.

(1) In the embodiment described above, a work machine (for example, a dump truck 1) includes a machine body frame 2, front wheels 4A disposed on the left and right of the machine body frame to be steered, rear wheels 4B disposed on the left and right of the machine body frame, an obstacle sensor (for example, a side obstacle sensor 11) that is provided on a side of the machine body frame and detects an obstacle, and a controller 18 that outputs a notification signal to a notification device when an obstacle is detected by the obstacle sensor. In the work machine, the obstacle sensor is provided at a position between the front wheel and the rear wheel on the side of the machine body frame, at which a virtual plane along an outer side face of the front wheel positioned correspondingly to a maximum steering angle steered in the maximum in a direction in which the front wheel becomes an inner wheel crosses an outer side face of the machine body frame.

Consequently, the detection range of the obstacle sensor can be suppressed from being narrowed.

(2) Further, in the embodiment described above, the work machine (for example, the dump truck 1) of (1) is configured such that the controller 18 calculates a region in which the front wheel 4A exists, outputs, if a detection position of an obstacle detected by the obstacle sensor (for example, the side obstacle sensor 11) is outside the region in which the front wheel exists, the notification signal to the notification device 17, and stops, if the detection position of an obstacle detected by the obstacle sensor is within the region in which the front wheel exists, outputting of the notification signal.

(3) Further, in the embodiment described above, the work machine (for example, the dump truck 1) of (1) is configured such that the obstacle sensor (for example, the side obstacle sensor 11) is disposed on a side face of the machine body frame 2, at a position on the machine body frame side with respect to a virtual plane along an inner side face of the front wheel 4A positioned correspondingly to traveling straight ahead with the steering angle being zero degrees.

(4) Further, in the embodiment described above, the work machine (for example, the dump truck 1) of (1) is configured such that a vessel 3 that is provided so as to be able to be inclined at an upper portion of the machine body frame 2 and into which cargoes are loaded is provided, and the obstacle sensor (for example, the side obstacle sensor 11) is disposed on a side face of the machine body frame at a position between a lower end face of the machine body frame and a bottom face of the vessel.

(5) Further, in the embodiment described above, the work machine (for example, the dump truck 1) of (2) is configured such that the controller 18 calculates a region in which the front wheel 4A exists on the basis of a steering angle of the front wheel, turning motion center coordinates in a steering direction of the front wheel, and a shape of the front wheel.

<Appendix>

It is to be noted that the present invention is not limited to the embodiment described above and includes various modifications and combinations without departing from the subject matter thereof. Further, the present invention is not limited to what includes all the configurations described hereinabove in connection with the embodiment described above and includes what does not include part of the configurations. Further, the configurations, functions, and so forth described above may be partly or entirely implemented, for example, by designing them with an integrated circuit. Further, the configurations, functions, and so forth described above may be implemented by software such that a processor interprets and executes programs for implementing the respective functions.

For example, although the front wheel coordinate calculation section 15 decides whether or not coordinates of an obstacle exist in the front wheel region in the present embodiment, this is not restrictive. Information of the front wheel region may be outputted to the obstacle coordinate calculation section 12 such that the obstacle coordinate calculation section 12 decides whether or not coordinates of an obstacle exist in the front wheel region.

Further, the notification method by the notification device 17 may be any one of display by a display unit and sounding of a speaker or may be means other than the display by the display unit and the sounding by the speaker if it is means for calling attention of the operator.

Further, coordinates of obstacle data may be acquired and processed not as a spot but as a region. At this time, when a region of obstacle data is entirely included in the front wheel region, basically the obstacle data is decided as data originating from the front wheel and notification is not performed. However, also when only part of the region of the obstacle data is included in the front wheel region, notification may not be performed.

Further, if the outer side face of the front wheel 4A is not a flat face, it may be approximated to and used as a flat face. However, in this case, it is desirable to arrange the side obstacle sensor 11 at a position at which it can detect at least part of the outer side face of the front wheel 4A.

Description of Reference Characters

| 1: | Dump truck |
|---|---|
| 2: | Machine body frame |
| 3: | Vessel (loading platform) |
| 4A: | Front wheel (driven wheel, steered wheel) |
| 4B: | Driving wheel |
| 5: | Pin-coupling portion |
| 6: | Derrick cylinder |
| 7: | Eave portion |
| 8: | Operation room |
| 11: | Side obstacle sensor |
| 12: | Obstacle coordinate calculation section |
| 13: | Front wheel coordinate sensor |
| 14: | Front wheel information storage section |
| 15: | Front wheel coordinate calculation section |
| 16: | Notification decision section |
| 17: | Notification device |
| 18: | Controller |
| 35: | Detection range |

**Claims**

1.  A work machine (1) comprising:

    a machine body frame (2);
    front wheels (4A) disposed on left and right of the machine body frame to be steered;
    rear wheels (4B) disposed on left and right of the machine body frame;
    an obstacle sensor (11) that is provided on a side of the machine body frame to detect an obstacle; and
    a controller (18) configured to output a notification signal to a notification device when an obstacle is detected by the obstacle sensor,

**characterized in that**

the obstacle sensor (18) is provided at a position between the front wheel (4A) and the rear wheel (4B) on the side of the machine body frame, at which a virtual plane along an outer side face of the front wheel positioned correspondingly to a maximum steering angle steered in the maximum in a direction in which the front wheel becomes an inner wheel crosses an outer side face of the machine body frame, wherein the controller is configured to

calculate a region in which the front wheel exists which is changed by the steering of the front wheel, output, when a detection position of an obstacle detected by the obstacle sensor is outside the region in which the front wheel exists, the notification signal to the notification device, and stop, when a detection position of an obstacle detected by the obstacle sensor is within the region in which the front wheel exists, outputting of the notification signal, and wherein

the obstacle sensor is disposed on a side face of the machine body frame, at a position on the machine body frame side with respect to a virtual plane along an inner side face of the front wheel positioned correspondingly to traveling straight ahead with the steering angle being zero degrees.

2. The work machine (1) according to claim 1, further comprising:

a vessel (3) that is provided so as to be able to be inclined at an upper portion of the machine body frame (2) and into which cargoes are loaded, wherein the obstacle sensor (11) is disposed on a side face of the machine body frame, at a position between a lower end face of the machine body frame and a bottom face of the vessel.

3. The work machine (1) according to claim 1, wherein the controller (18) is configured to calculate the region in which the front wheel (4a) exists on a basis of a steering angle of the front wheel, turning motion center coordinates in a steering direction of the front wheel, and a shape of the front wheel.

**Patentansprüche**

1. Arbeitsmaschine (1) umfassend:

einen Maschinenkörperrahmen (2) ;
Vorderräder (4A), die links und rechts von dem zu lenkenden Maschinenkörperrahmen angeordnet sind;
Hinterräder (4B), die links und rechts von dem Maschinenkörperrahmen angeordnet sind;
einen Hindernissensor (11), der an einer Seite des Maschinenkörperrahmens vorgesehen ist, um ein Hindernis zu erfassen; und
eine Steuerung (18), die konfiguriert ist, um ein Benachrichtigungssignal an eine Benachrichtigungsvorrichtung auszugeben, wenn ein Hindernis durch den Hindernissensor erfasst wird,
**dadurch gekennzeichnet, dass**
der Hindernissensor (18) an einer Position zwischen dem Vorderrad (4A) und dem Hinterrad (4B) an der Seite des Maschinenkörperrahmens vorgesehen ist, an der eine virtuelle Ebene entlang einer äußeren Seitenfläche des Vorderrads, die entsprechend einem maximalen Lenkwinkel positioniert ist, der maximal in eine Richtung gelenkt wird, in der das Vorderrad ein inneres Rad wird, eine äußere Seitenfläche des Maschinenkörperrahmens kreuzt, wobei
die Steuerung konfiguriert ist, um

einen Bereich zu berechnen, in dem das Vorderrad vorhanden ist, der durch das Lenken des Vorderrads geändert wird,
wenn eine Erfassungsposition eines Hindernisses, das durch den Hindernissensor erfasst wird, außerhalb des Bereichs liegt, in dem das Vorderrad vorhanden ist, das Benachrichtigungssignal an die Benachrichtigungsvorrichtung auszugeben, und
wenn eine Erfassungsposition eines Hindernisses, das durch den Hindernissensor erfasst wird, innerhalb des Bereichs liegt, in dem das Vorderrad vorhanden ist, die Ausgabe des Benachrichtigungssignals zu stoppen, und wobei

der Hindernissensor an einer Seitenfläche des Maschinenkörperrahmens an einer Position an der Seite des Maschinenkörperrahmens in Bezug auf eine virtuelle Ebene entlang einer inneren Seitenfläche des Vorderrads angeordnet ist, die entsprechend der Geradeausfahrt positioniert ist, wobei der Lenkwinkel null Grad beträgt.

2. Arbeitsmaschine (1) nach Anspruch 1, ferner umfassend:

ein Schiff (3), das so vorgesehen ist, dass es an einem oberen Abschnitt des Maschinenkörperrahmens (2) geneigt werden kann, und in das Ladungen geladen werden, wobei
der Hindernissensor (11) an einer Seitenfläche des Maschinenkörperrahmens an einer Position zwischen einer unteren Endfläche des Maschinenkörperrahmens und einer Bodenfläche des Schiffs angeordnet ist.

3. Arbeitsmaschine (1) nach Anspruch 1, wobei
die Steuerung (18) konfiguriert ist, um den Bereich, in dem das Vorderrad (4a) vorhanden ist, auf der Grundlage eines Lenkwinkels des Vorderrads, von Drehbewegungszentrumskoordinaten in einer Lenkrichtung des Vorderrads und einer Form des Vorderrads zu berechnen.


**Revendications**

1. Machine de travail (1) comprenant :

un châssis de corps de machine (2) ;
des roues avant (4A) disposées sur la gauche et la droite du châssis de corps de machine à diriger ;
des roues arrière (4B) disposées sur la gauche et la droite du châssis de corps de machine ;
un capteur d'obstacle (11) qui est prévu sur un côté du châssis de corps de machine pour détecter un obstacle ; et
un dispositif de commande (18) configuré pour délivrer un signal de notification à un dispositif de notification lorsqu'un obstacle est détecté par le capteur d'obstacle,
**caractérisé en ce que**
le capteur d'obstacle (18) est prévu à une position entre la roue avant (4A) et la roue arrière (4B) sur le côté du châssis de corps de machine, à laquelle un plan virtuel le long d'une face latérale extérieure de la roue avant positionnée de manière correspondante à un angle de braquage maximum dirigé au maximum dans une direction dans laquelle la roue avant devient une roue intérieure croise une face latérale extérieure du châssis de corps de machine, dans lequel
le dispositif de commande est configuré pour

calculer une région dans laquelle la roue avant existe qui est modifiée par le braquage de la roue avant, délivrer, lorsqu'une position de détection d'un obstacle détecté par le capteur d'obstacle est à l'extérieur de la région dans laquelle la roue avant existe, le signal de notification au dispositif de notification, et arrêter, lorsqu'une position de détection d'un obstacle détecté par le capteur d'obstacle est à l'intérieur de la région dans laquelle la roue avant existe, la délivrance du signal de notification, et dans lequel

le capteur d'obstacle est disposé sur une face latérale du châssis de corps de machine, à une position sur le côté de châssis de corps de machine par rapport à un plan virtuel le long d'une face latérale intérieure de la roue avant positionnée de manière correspondante à un déplacement en ligne droite avec l'angle de braquage étant de zéro degré.

2. Machine de travail (1) selon la revendication 1, comprenant en outre :

un navire (3) qui est prévu de manière à pouvoir être incliné au niveau d'une partie supérieure du châssis de corps de machine (2) et dans lequel des cargaisons sont chargées, dans laquelle
le capteur d'obstacle (11) est disposé sur une face latérale du châssis de corps de machine, à une position entre une face d'extrémité inférieure du châssis de corps de machine et une face inférieure du navire.

3. Machine de travail (1) selon la revendication 1, dans laquelle
le dispositif de commande (18) est configuré pour calculer la région dans laquelle la roue avant (4a) existe sur la base d'un angle de braquage de la roue avant, de coordonnées de centre de mouvement de rotation dans une direction de braquage de la roue avant, et d'une forme de la roue avant.

FIG. 1

FIG. 2

# FIG. 3

FRONT

LEFT ⟷ RIGHT

REAR

32

4A

13

2

3

35

11

4B

# FIG. 4

```
  11                12        18         16                17

┌──────────┐   ┌───────────────────────────────────────────────┐   ┌──────────────┐
│   SIDE   │   │  ┌──────────┐    ┌──────────────┐              │   │ NOTIFICATION │
│ OBSTACLE │──┼─▶│ OBSTACLE │───▶│ NOTIFICATION │──────────────┼──▶│   DEVICE     │
│  SENSOR  │   │  │COORDINATE│    │  DECISION    │              │   └──────────────┘
└──────────┘   │  │CALCULATION│   │   SECTION    │              │
               │  │ SECTION  │    └──────────────┘              │
               │  └────┆─────┘           ▲                      │
               │       ┆                 │                      │
┌──────────┐   │  ┌────▼─────┐           │                      │
│FRONT WHEEL│  │  │FRONT WHEEL│──────────┘                      │
│COORDINATE │──┼─▶│COORDINATE │                                 │
│  SENSOR   │  │  │CALCULATION│                                 │
└──────────┘   │  │  SECTION  │──15                             │
               │  └────▲─────┘                                  │
   13          │       │                                        │
               │  ┌────┴─────┐                                  │
               │  │FRONT WHEEL│                                 │
               │  │INFORMATION│                                 │
               │  │ STORAGE  │                                  │
               │  │ SECTION  │──14                              │
               │  └──────────┘         CONTROLLER               │
               └───────────────────────────────────────────────┘
```

# FIG. 5

```
( START )
   │
   ▼
┌─────────────────────────────────────┐
│ DETECTION RESULT DATA ACQUISITION   │ S100
└─────────────────────────────────────┘
   │
   ▼
┌─────────────────────────────────────┐
│ OBSTACLE COORDINATE CALCULATION     │ S110
└─────────────────────────────────────┘
   │
   ▼                              S120
  ╱ IS OBSTACLE ╲                       NO
 ╱  IN DETECTION  ╲ ─────────────────────────┐
 ╲     RANGE?     ╱                          │
  ╲             ╱                            │
   │ YES                                     │
   ▼                                         │
┌─────────────────────────────────────┐     │
│ FRONT WHEEL ANGLE DATA ACQUISITION  │ S130 │
└─────────────────────────────────────┘     │
   │                                         │
   ▼                                         │
┌─────────────────────────────────────┐     │
│ FRONT WHEEL REGION CALCULATION      │ S140 │
└─────────────────────────────────────┘     │
   │                                         │
   ▼                 S150                    │
  ╱    ARE      ╲                  YES       │
 ╱ ALL OBSTACLES ╲ ───────────────────────►  │
 ╲ IN FRONT WHEEL ╱                          │
  ╲   REGION?   ╱                            │
   │ NO                                      │
   ▼                                         │
┌─────────────────────────────────────┐     │
│ AFTER-EXTRACTION                    │ S160 │
│ OBSTACLE DATA CREATION              │     │
└─────────────────────────────────────┘     │
   │                                         │
   ▼                 S170                    │
 NO  ╱ IS NOTIFICATION ╲                     │
┌─── ╲   NECESSARY?    ╱                     │
│     ╲              ╱                        │
│      │ YES                                  │
▼                                            │
┌────────────────────┐ S171                  │
│ NOTIFICATION SIGNAL│                       │
│ OUTPUT STOP        │                       │
└────────────────────┘                       │
│         │                                  │
│         ▼                                  │
│  ┌─────────────────────────────────┐       │
│  │ NOTIFICATION SIGNAL OUTPUT      │ S180  │
│  └─────────────────────────────────┘       │
│         │                                  │
└─────────┴──────────────────────────────────┘
          │
          ▼
       ( END )
```

# FIG. 6

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013195084 A
- US 2013173201 A1
- US 2004217851 A1